# EUROPÄISCHE PATENTSCHRIFT

(11) **EP 2 560 807 B1**
(45) Veröffentlichungstag und Bekanntmachung des Hinweises auf die Patenterteilung: **30.08.2017**
(21) Anmeldenummer: 11735767.3
(22) Anmeldetag: 10.04.2011
(51) Int. Cl.: B29C 67/00, B22F 3/105

(54) **VERFAHREN UND VORRICHTUNG ZUM HERSTELLEN DREIDIMENSIONALER MODELLE**
METHOD AND DEVICE FOR PRODUCING THREE-DIMENSIONAL MODELS
PROCÉDÉ ET DISPOSITIF DE RÉALISATION DE MODÈLES TRIDIMENSIONNELS

(30) Priorität: 17.04.2010 DE 102010015451
(43) Veröffentlichungstag der Anmeldung: 27.02.2013
(73) Patentinhaber: Voxeljet AG, 86316 Friedberg (DE)
(72) Erfinder: EDERER, Ingo, 82269 Geltendorf (DE); GÜNTHER, Daniel, 80637 München (DE); HARTMANN, Andreas, Dominik, 86391 Stadtbergen (DE)
(74) Vertreter: Helbig, Christian
(86) Internationale Anmeldenummer: PCT/DE2011/000378
(87) Internationale Veröffentlichungsnummer: WO 2011/127897

(56) Entgegenhaltungen:
- EP-A1- 2 289 462
- WO-A2-01/40866
- DE-A1- 4 102 260
- US-A- 5 269 982

## Beschreibung

Die Erfindung bezieht sich auf ein Verfahren zum Herstellen dreidimensionaler Modelle gemäß den Ansprüchen 1 und 12 sowie eine Vorrichtung gemäß dem Anspruch 13. Aus der europäischen Patentschrift EP 0 431 924 B1 ist beispielsweise ein Verfahren zur Herstellung dreidimensionaler Objekte aus Computerdaten bekannt. Bei dem dort beschriebenen Verfahren wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen des Partikelmaterials entsteht so ein dreidimensionales Objekt.

Dieses aus verfestigtem Partikelmaterial hergestellte Objekt ist nach seiner Fertigstellung in einem Bauzylinder in einem Prozessraum in losem Partikelmaterial eingebettet und wird dann aus dem Prozessraum entnommen und von losem Partikelmaterial befreit. Dies erfolgt beispielsweise mittels eines Saugers. Übrig bleiben danach die gewünschten Objekte, die dann vom Restpartikelmaterial z.B. durch Abbürsten befreit werden.

In ähnlicher Weise arbeiten auch andere Partikelmaterial-gestützte Rapid-Prototyping-Prozesse, wie beispielsweise das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Allen genannten Ausführungsformen gemein ist ein untergliederter Herstellungsprozess der gewünschten Produkte. Zuerst wird immer in dem oben genannten Prozessraum ein gefülltes Volumen, das die Bauteile enthält, erzeugt. Ein Beispiel könnte eine Pulverschüttung sein. Daran schließen sich weitere einzelne nacheinander abfolgende Schritte an, wie beispielsweise das Entfernen von Partikelmaterial, um die gewünschten endgültigen Bauteile zu erhalten.

In verschiedenen weiteren Veröffentlichungen wie beispielsweise der WO2004014637A1 oder der US7291002B2 wird dann zumindest der Bauprozess betrachtet und dafür ein kontinuierlicher Betrieb vorgeschlagen. Dazu wird die Bauplattform kontinuierlich abgesenkt und die Schichtaufbringung in einer Schraubenbewegung über das Baufeld geführt. Allerdings ist neben dem apparativen Aufwand auch bei dieser Vorgehensweise nach Beendigung des Bauprozesses erst ein Schritt beendet. Das Entfernen des nicht verfestigten Partikelmaterials erfolgt wieder in einem anschließenden getrennten Vorgang.

In der WO 01/40866 A2 wird ein 3D - Druckverfahren mit einer Strahlungsquelle beschrieben. Ein Gegenstand gemäß der Erfindung wird weder offenbart noch nahe gelegt.

Die US 5,269,982 beschreibt die Herstellung eines Objektes mittels Hitzestrahlung und Teilchenverschmelzung. Ein Gegenstand gemäß der Erfindung wird weder offenbart noch nahe gelegt.

Die EP 2 289 462 A1 betrifft ein kontinuierliches Verfahren zur Herstellung von dreidimensionalen Objekten mittels selektiven Sinterns oder Schmelzens. Ein Gegenstand gemäß der Erfindung wird weder offenbart noch nahe gelegt.

Aufgabe der Erfindung ist es nun, ein Verfahren und eine Vorrichtung zur Verfügung zu stellen, mit denen es möglich ist, kontinuierlich verschiedene Arbeitsschritte zu durchlaufen.

Diese Aufgabe wird durch ein Verfahren gemäß dem Patentanspruch 1 und 12 sowie eine Vorrichtung nach Anspruch 13 gelöst.

Gemäß einem Aspekt der vorliegenden Erfindung wird ein Verfahren nach Anspruch 1. Hierbei erfolgt eine Förderung des ersten Materials während des Aufbauprozesses und fortlaufend durchgehend und gleichmäßig bis zu einer Entpackposition. Fortlaufend bedeutet dabei gemäß der vorliegenden Erfindung nicht, dass die Förderung unbedingt immer mit der gleichen Geschwindigkeit stattfindet. Je nach Aufbau kann die Förderung auch stufenweise erfolgen.

Das erste Material kann dabei jedes erdenkliche schichtweise auftragbares Material umfassen. Beispielsweise könnte dies ein Pulvermaterial, ein Folienmaterial oder ein fluides Material, wie beispielsweise ein geschmolzenes Strang- und/oder ein Tropfenmaterial sein, wie es beim bekannten FDM Verfahren eingesetzt wird.

Wird nun beispielsweise als erstes Material ein Partikelmaterial bereitgestellt, so könnte gemäß einer bevorzugten Ausführungsform der vorliegenden Erfindung ein Verfahren zum Herstellen dreidimensionaler Objekte gemäß Computerdaten bereitgestellt werden, wobei mittels eines Beschichters in einem Prozessraum Partikelmaterial schichtweise auf eine Partikelmaterialschüttung aufgetragen wird und das Partikelmaterial über eine Verfestigungseinrichtung im Prozessraum selektiv verfestigt wird und diese Schritte wiederholt werden, bis ein erwünschtes Objekt erhalten und entpackt wird.

Der Aufbauprozess beinhaltet gemäß der vorliegenden Erfindung das Auftragen einer ersten Materialschicht und gegebenenfalls das Verfestigen bestimmter Bereiche, die gemäß Computerdaten vorgesehen sind.

Durch die Förderung des ersten Materials fortlaufend durchgehend und gleichmäßig bis zu einer Entpackstatiön auch schon während des Aufbauprozesses, können kontinuierlich und teilweise gleichzeitig mehrere Arbeitsschritte durchlaufen werden... Eine derartige Vorrichtung kann auch endlos betrieben werden.

Unter Fördern ist gemäß der vorliegenden Erfindung dabei nicht nur das Durchführen eines ersten Materials zu verstehen. Vielmehr könnte es genauso sein, dass die Beschichtungs- und die Verfestigungseinheit über die Schichten des ersten Materials verschoben werden und somit ein Bereich eines Prozessraumes oder Aufbauraumes und damit auch eine Entpackposition laufend verschoben wird und damit das erste Material gemäß kinematischer Umkehr gefördert wird.

Es wird also vorgeschlagen, beim Betrieb des Verfahrens auf eine absenkbare Bauplattform zu verzichten und anstelle dessen einen fortlaufende Materialschichtstapel oder auch beispielsweise Partikelmaterialschüttung zu produzieren. Dieser Materialschichtstapel beispielsweise eine Partikelmaterialschüttung, gegebenenfalls mit aufgebauten Objekten, kann auf einer Seite einen Prozessraum und auch eine Entpackposition schon verlassen haben, während auf der anderen Seite noch der Aufbauprozess von Objekten durchgeführt wird.

Gemäß einer bevorzugten Ausführungsform der Erfindung bleibt bei einem erfindungsgemäßen Verfahren eine Förderrichtung und auch bis zur Entpackposition im Wesentlichen bestehen. Hierunter soll gemäß der vorliegenden Erfindung zu verstehen sein, dass die Förderung durchaus leichte Richtungswechsel aufweisen kann, wie beispielsweise Kurven. Es soll aber keine Richtungsumkehr stattfinden. Da der Förderprozess kontinuierlich ist, bleibt auch die Fördergeschwindigkeit im Wesentlichen gleich.

Bei der Verwendung von Partikelmaterial könnte dies beispielsweise derart vorgesehen sein, dass der Beschichter und die Partikelmaterialschüttung derart vorgesehen sind, dass zum Auftragen einer weiteren Partikelschicht Beschichter und Pulverschüttung derart relativ zueinander bewegt werden, dass eine Aufnahmeebene eines Partikelmaterialaufnahmemittels zu einer Schichtebene des Beschichters, bzw. der aufgetragenen Materialschicht, einen Winkel von > 0° aufweist.

Der Winkel könnte besonders bevorzugt kleiner oder gleich einem Böschungswinkel des Partikelmaterials gewählt werden.

Je nach dem, in welcher Art und Weise das Material fortbewegt wird, kann es unter Umständen hilfreich sein, wenn durch die Verfestigungseinheit in dem Material Strukturen, insbesondere Hilfsstrukturen erzeugt werden, die ein Abrutschen von Material im Prozessraum erschweren. Durch eine solche Ausgestaltung können die Materialschichten noch weiter stabilisiert werden.

Bei der der Verwendung von Partikelmaterial könnte das erfindungsgemäße Verfahren dabei vorzugsweise derart durchgeführt werden, dass zuerst Partikelmaterial in einer Schüttung in den Prozessraum eingebracht wird und anschließend auf dieser Partikelmaterialschüttung ein Bauprozess eines Objektes beginnt.

Es kann dabei gemäß einer besonders bevorzugten Ausführungsform der vorliegenden Erfindung vorgesehen sein, dass die erzeugten Objekte nach dem Herausführen aus dem Prozessraum ohne Unterbrechung des Aufbauverfahrens, beispielsweise aus dem Partikelmaterial entpackt werden.

Gemäß einer besonders bevorzugten Ausführungsform des erfindungsgemäßen Verfahrens werden als Material Feststoffe in Form dünner Folien aufgetragen.

Diese Folien können beispielsweise mittels Kleben und/oder Schweißen miteinander verbunden werden.

Daneben ist es aber auch möglich, dass durch die Verfestigungseinheit zusätzlich Strukturen erzeugt werden, die das automatische Entpacken der Bauteile erleichtern.

Das erfindungsgemäße Verfahren kann dabei kontinuierlich durchgeführt werden. Das bedeutet, dass in den Schichten des Materials in einem Prozessraum beziehungsweise einem Prozessbereich ein Aufbauprozess der Objekte erfolgt und die Materialschichten mit den Objekten immer weiter transportiert werden und der Aufbauprozess beliebig lange weitergeführt werden kann. Nach dem Herausführen der Objekte aus dem Prozessraumbereich können diese dann beispielsweise entpackt werden und von einem eventuellen Fördermittel entnommen werden, wenn das Material gemäß einer bevorzugten Ausführungsform über Fördermittel bewegt wird.

Dabei wäre es beispielsweise denkbar, dass das Fördermittel endlos verläuft.

Es könnte auch sein, dass das Material horizontal bewegt wird oder auch mit einem Winkel zur Horizontalen bewegt wird.

Gemäß einem weiteren Aspekt betrifft die Erfindung auch ein Verfahren nach Anspruch 12. Hierbei weist die Schichtebene zu einer Aufnahmeebene des Aufnahmemittels einen Winkel größer 0° auf. Gemäß einem noch weiteren Aspekt der vorliegenden Erfindung wird eine Vorrichtung nach Anspruch 13. Wird beispielsweise als Schichtmaterial Partikelmaterial verwendet, so könnte die Vorrichtung derart vorgesehen sein, dass mittels eines Beschichters Partikelmaterial in einer Schichtebene schichtweise auf eine Partikelmaterialschüttung aufgetragen wird und das Partikelmaterial über eine Verfestigungseinrichtung selektiv verfestigt wird und diese Schritte wiederholt werden.

Hierbei sind Mittel vorgesehen, um das Material während des Aufbauprozesses durchgehend und gleichmäßig bis zu einer Entpackposition zu fördern.

Daneben ist es aber weiterhin denkbar, dass das Material Folienmaterial, Strangmaterial und/oder ein Fluid umfasst.

Als Verfestigungseinheit ist ein Tropfenerzeuger. Dabei kann ein zweites Material selbsthärtend, beispielsweise bei Kontakt mit dem Partikelmaterial sein. Oder dem Partikelmaterial kann eine Substanz beigemischt sein, die zur Verfestigung des Materials bei Kontakt führt. Es ist auch denkbar, dass das zweite Material mittels UV Bestrahlug oder durch Zufuhr von Wärme oder in Anwesenheit eines Gases härtet.

Gemäß einer weiteren bevorzugten Ausführungsform der vorliegenden Erfindung werden der Beschichter und/oder die Verfestigungseinrichtung auf einem einen Winkel zur Senkrechten der Aufnahmeebene des Aufnahmemittels angeordneten Koordinatensystem bewegt.

Wird ein Partikelmaterial verwendet, so wird vorzugsweise der Winkel des Koordinatensystems kleiner als ein Böschungswinkel des Partikelmaterials gewählt.

Gemäß einer besonders bevorzugten Ausführungsform der vorliegenden Erfindung begünstigt dabei der Winkel der Schüttung durch Abrutschen des Partikelmaterials das Befreien der Objekte von Partikelmaterial nach dem Aufbauprozess.

Gemäß einer bevorzugten Ausführungsform der vorliegenden Erfindung wird das Material auf einer Fördereinrichtung bewegt, wobei diese vorteilhafterweise ein oder mehrere Förderbänder aufweist.

Weiterhin ist es auch möglich, dass die Fördereinrichtung einen Kettenförderer aufweist.

Um die Vorrichtung etwas kleiner ausgestalten zu können, kann es auch vorgesehen sein, dass Begrenzungen der Materialschichten vorgesehen sind.

Diese Materialschichten können dabei gegebenenfalls über Begrenzungswände zu beiden Seiten und auch nach oben stabilisiert werden.

An den Stirnseiten ist das Schichtmaterial oder auch die Schüttung (bei Verwendung von Partikelmaterial) jeweils zugänglich. Auf der einen Stirnseite ist ein Beschichter montiert, der neues Partikelmaterial auf die Schüttung aufträgt. Der Beschichter verfährt dabei über die Schüttung in einem Winkel zur Horizontalen alpha, der kleiner als der Schüttwinkel des Partikelmaterials ist. Darüber wird sicher gestellt, dass die Schicht neu aufgetragenen Partikelmaterials an der gewünschten Stelle verbleibt und nicht abrutscht. Vorteilhafterweise lässt sich der Winkel alpha an der Vorrichtung einstellen, um diese an das Partikelmaterial anzupassen. Auf dieser Seite ist zudem eine Vorrichtung angebracht, die entlang der durch den Beschichter definierten Partikelmaterialebene das Partikelmaterial selektiv verfestigt. Diese Verfestigungseinrichtung kann ein Druckkopf sein, der kleine Flüssigkeitströpfchen auf das Partikelmaterial abgibt, die dazu führen, dass das Partikelmaterial dort lokal begrenzt verfestigt. Alternativ können andere Vorrichtungen, wie beispielsweise eine Strahlquelle für energiereiche Strahlen, eingesetzt werden.

Nach Vollendung einer Schicht bestehend aus Beschichtung und anschließender Verfestigung wird die Schüttung um die Schichtstärke weiter transportiert. Dies kann beispielsweise mit Hilfe eines Förderbandes erfolgen, auf dem die Schüttung ruht.

Es könnte dabei sein, dass die Begrenzungsflächen an den Seiten der Schüttung ebenfalls als gleichlaufende Förderbänder ausgestaltet sind. Andere Fördermöglichkeiten bestehen beispielsweise in der Verwendung von formschlüssigen Förderketten, die nur zum Teil z.B. über Zapfen im Eingriff mit der Schüttung stehen und diese um die Schichtstärke weiter bewegen.

Denkbar wäre auch der Einsatz einer Schubplatte, die nach Beendigung der aktuellen Schicht nachdem der Druckkopf und der Beschichter in eine Parkposition verfahren sind, in Kontakt mit der Schüttung kommt und diese um die Schichtstärke weiter in Richtung des anderen freien Endes schiebt.

In allen beschriebenen Ausführungsformen ist eine erfindungsgemäße Vorrichtung einfacher aufgebaut als beim beschriebenen Stand der Technik. Dies liegt an mehreren Punkten. Zum einen ist die im kontinuierlichen Betrieb auftretende Menge bewegten Partikelmaterials nahezu konstant und nicht zunehmend wie bei den Vorrichtungen der bekannten Art. Das vereinfacht Führungen und Antriebe, die auf einen konstanten Betriebspunkt ausgelegt werden können. Zum anderen kann die Bewegung der Partikelmaterialschüttung und die Aufnahme der durch sie hervorgerufenen Gewichtskräfte voneinander getrennt werden. Die Schüttung ruht auf einer Unterlage und muss nicht oder nur wenig in Schwerkraftrichtung bewegt werden.

Damit ein Abrutschen der Schüttung verhindert wird, kann eine Gitterstruktur mit gedruckt werden. Diese stabilisiert die Partikelrriaterialschüttung und hilft auch in der späteren Ausbrechzone, das unkontrollierte Abfließen von Partikelmaterial zu verhindern.

Die Länge der Schüttung von der Druck- und/oder Beschichtungseinheit bis zum Verlassen des Prozessraumes, beziehungsweise bis zum Austreten aus dem Prozessraum und Erreichen des Entpackbereiches beispielsweise an einer dem Prozessraum gegenüberliegenden Seite kann zum Beispiel an den jeweiligen Verfestigungsprozess angepasst werden. So kann die Länge so ausgelegt sein, dass die Schüttung eine gewisse Verweildauer in der zusammenhängenden Situation verbleibt, um beispielsweise der Flüssigkeit die Zeit zur Reaktion mit dem Partikelmaterial zu geben, um eine ausreichende Festigkeit zu entwickeln. Es kann auch sein, dass der Verfestigungsprozess Wärme benötigt oder produziert. Die Wärme könnte z.B. über ein angewärmtes Partikelmaterial oder z.B. Strahlungsquellen, die die Beschichtungsebene anwärmen, in die Schüttung eingebracht werden. In diesem Fall kann die Verweildauer genutzt werden, um die Schüttung kontrolliert von der der Verfestigungszone gegenüber liegenden Seite her abzukühlen. Es sind auch Fälle denkbar, wo beide Effekte gemeinsam genutzt werden. In beiden Fällen entsteht ein Gradient, der konform mit dem Schichtbau durch die Schüttung verläuft.

Im Gegensatz zu den diskontinuierlichen Verfahren erreichen in diesem Fall die Schichten in derselben Reihenfolge die Ausbrechzone wie sie aufgebaut wurden. Die Verweildauer kann also in der Partikelmaterialschüttung für alle Bereiche nahezu konstant gehalten werden. Dies ist ein großer Vorteil, da so die Aushärtung viel kontrollierter ablaufen kann und damit weniger Verzug einhergeht, als bei Vorrichtungen nach dem Stand der Technik.

An dem zweiten freien Ende schließt sich eine Ausbrechzone (Entpackposition) an, an der die nicht verfestigten Teile des Partikelmaterials entfernt werden. Dies kann manuell oder beispielsweise automatisiert mit Absaugen und/oder Abblasen erfolgen. Die Ausbrechzone sollte dabei in Richtung des Schichtbaus so lang dimensioniert sein, dass sowohl größere Objekte vollständig entnommen werden können, aber auch längere Unterbrechungen der Ausbrechtätigkeit nicht zu einem Abbruch des Schichtbauprozesses führen müssen, weil die Schüttung das Ende der Vorrichtung erreicht.

Da die Bauteile in Schwerkraftrichtung übereinander gestapelt liegen können, ist es evtl. erforderlich die Bauteile in zusätzlich mit zu bauenden Stützstrukturen zu betten, die auch bei Abwesenheit des umliegenden Partikelmaterialmaterials eine ausreichende Stützwirkung entfalten und die Bauteile in Position halten, bis sie entnommen werden.

Die Ausbrechzone kann des Weiteren so gestaltet sein, dass große Teile des unverfestigten Partikelmaterials frei abfließen können. Das kann zum Beispiel in Form einer perforierten Unterlage erfolgen beziehungsweise wird alleine schon durch die Abwesenheit seitlicher Begrenzungswände erzielt.

Die Ausbrechzone kann Hilfsmittel wie mit Druckluft oder anderen Fluiden beaufschlagte Düsen aufweisen, die auf die Partikelmaterialschüttung gerichtet sind und im Betrieb das Abführen des unverfestigten Partikelmaterials unterstützen. Das Abfließen des Partikelmaterials kann in der Ausbrechzone auch durch Eintrag mechanischer Energie wie zum Beispiel Schwingungen unterstützt werden.

Ist das Partikelmaterial im Prozess wieder verwendbar, kann es in der Ausbrechzone gesammelt und über eine eventuelle Aufbereitungsstrecke dem Auftragsprozess wieder zugeführt werden. In der Aufbereitungsstrecke kann auch eine Siebung des Partikelmaterials und oder eine geregelte Zufuhr von frischem Partikelmaterial notwendig sein.

Die Vorrichtung hat in diesem Fall gegenüber dem Stand der Technik, den Vorteil, dass die Auftrags- und die Ausbrechzone in einer Vorrichtung vereint vorliegen und die Materialströme so leicht ausgeführt und gesteuert werden können. Aufgrund des kontinuierlichen Betriebes können bei entsprechender Wiederverwertung des Partikelmaterials zudem die notwendigen Puffermengen an Partikelmaterial relativ klein ausfallen. Bei vollständiger Wiederverwendung des Partikelmaterials muss dann nur eine Partikelmenge dem Prozess neu zugeführt werden, die der verfestigten Menge entspricht.

Bei horizontaler Orientierung der Förderebene, wirkt sich die Verfestigungsdauer beziehungsweise die Ausbrechdauer rein auf die Länge der Vorrichtung aus.

Allerdings ist das Koordinatensystem des Schichtbaus nicht kartesisch sondern um den eingestellten Böschungswinkel verzerrt.

Bei sehr flachen Schüttkegeln des Partikelmaterials kann dies zu stark verzerrten Bauräumen beziehungsweise Prozessräumen führen, die zu einer Verlängerung der notwendigen Prozessdauer pro Bauteil führen. Es kann daher sinnvoll sein, die Förderebene gegen die Horizontale um einen Winkel beta zu kippen, und so das Koordinatensystem wieder aufzurichten. Dies hat zudem den Vorteil, dass das Eigengewicht der Schüttung in Förderrichtung wirkt und die zur Bewegung der Schüttung notwendigen Kräfte sinken.

In der Ausbrechzone wirkt in diesem Fall der Schüttkegel gegen die abfallende Förderebene. D.h. das Partikelmaterial neigt dazu, aus der Verfestigungszone zu fließen. Im schlimmsten Fall, wenn der Schüttkegel gleich dem Winkel beta ist, wird die Verfestigungszone komplett ausfließen, wenn keine Gegenmaßnahmen wie beispielsweise gedruckte Schotten oder eine Gitter- oder Wabenstruktur vorgesehen werden.

In beiden Fällen ist es erforderlich, zum Anfahren der Anlage eine Hilfsplatte auf die Förderebene zu stellen, die das Auflegen erster Schichten ermöglicht. Diese Hilfsplatte übernimmt den Böschungswinkel alpha und wird von der Fördereinrichtung durch die Verfestigungszone gezogen, bis das Ende des Ausbrechraums erreicht ist und eine einfache Entnahme der Hilfsplatte möglich wird.

Beim Herunterfahren der Anlage sind hingegen keine besonderen Maßnahmen zu beachten. Das freie Ende der Schüttung wird einfach durch die Verfestigungszone in den Ausbrechbereich gezogen.

Mit einer derartigen Anlage lassen sich eine Vielzahl unterschiedlicher Materialien verarbeiten. Neben den Flüssigkeiten, Folienmaterial und Strangmaterial zählt dazu Sand, Gips, Metallpartikelmaterial, beziehungsweise andere anorganische Partikelmaterialien aber auch Kunststoffpartikelmaterial, Mehl und weitere organische Partikelmaterialien.

Die Anlage und der Prozess lassen ein weites Feld unterschiedlicher Applikationen wie zum Beispiel die Herstellung von Formen und Modellen für den Metallguss aber auch die Herstellung von Bauteilen verschiedenster Art zu. Ein interessanter Vorteil ist auch, dass sich durch die kontinuierliche Vorgehensweise auch längere Bauteile herstellen lassen, ohne die Vorrichtung verändern zu müssen.

Allgemein lässt sich ausführen, dass ein Prinzip der im wesentlich horizontal verlaufenden "Z-Achse" sich für alle feststoffverarbeitenden Schichtbauverfahren eignet. D.h. überall dort, wo das aufgetragene Material bereits kurz nach dem Auftrag genügend Festigkeit entwickelt, um nicht unter Eigengewicht seitlich abzurutschen, kann das Prinzip funktionieren.

Die Material-Auftragsarten können gemäß der vorliegenden Erfindung unterschiedlich sein.
1) Feststoffe in Form dünner Folien aus Papier, Metall aber auch Kunststoff usw. können schichtweise aufgetragen werden (LOM). Sie können beispielsweise auf einen Schichtenkörper aufgetragen werden, der im Wesentlichen horizontal bewegt wird.
   Die Auftragsebene des Schichtenkörpers kann in einem Winkel kleiner 90° zur Bewegungsrichtung stehen, muss aber nicht. Bei einem solchen Fall wäre auch ein kartesisches System denkbar, das heißt die Auftragsebene steht zur Bewegungsrichtung senkrecht.
   Die Folien werden auf den Schichtenkörper aufgebracht und dort mit dem Schichtenkörper beispielsweise über Kleben, Schweißen oder ähnlichem verbunden. Die Kontur des Bauteils wird aus der jeweiligen Schicht beispielsweise mittels Laser, Schneidemesser oder anderer Schnittverfahren herausgeschnitten. Das Schneiden kann dabei vor oder nach dem Auftragsschritt erfolgen. Wenn es nach dem Auftragsschritt erfolgt, muss die Tiefe des Schnitts kontrolliert werden. Zur Erleichterung des Entpackens können Hilfsschnitte eingebracht werden, die das umliegende Folienmaterial in kleinere Einheiten zerlegen. Die Hilfsschnitte können beispielsweise in Form von Rechtecken eingebracht werden. An komplizierten Strukturen können die Rechtecke dann auch verkleinert werden, um besser an die Kontur zu kommen. Eine weitere Möglichkeit zur Vereinfachung des Entpackens ist der selektive Auftrag des Klebers zwischen den Folien. Dies kann beispielsweise über den photoelektrischen Auftrag eines Schmelzklebers mittels (Laser-Drucker) erfolgen.
   Die Folien können entweder von der Rolle, oder von einem Einzelblattvorrat in den Auftragsbereich transportiert werden. Die Abwicklung von der Rolle ist in diesem Zusammenhang vorteilhaft, da der Automatisierungsaufwand klein gehalten werden kann.
   Ist die aktuelle Folie aufgetragen und beschnitten, wird der Vorschub betätigt und der Schichtenkörper um die Foliendicke weiter transportiert. Der Schichtenkörper sollte eine gewisse Länge erreicht haben, um stabil die darin befindlichen Bauteile zu lagern. Hat der Schichtenkörper diese Minimallänge auf der Fördereinrichtung erreicht kann am der Folienauftragsebene entgegengesetzten Ende mit dem Entfernen des überschüssigen Folienmaterials begonnen werden, um die eigentlichen Bauteile zu gewinnen. Das Entfernen kann dann manuell erfolgen. Der Vorteil in dieser Aufbauart liegt wieder im quasi endlosen Betrieb der Anlage.
   Zum Anfahren der Anlage wird eine zusätzliche Vorrichtung in Form eines Winkels benötigt, auf den die ersten Schichten aufgetragen werden. Der Winkel wird solange benötigt, bis der aus den Folien aufgebaute Schichtenkörper eine entsprechende Eigenfestigkeit aufweist und das eigene Gewicht ohne Verformung tragen kann.
2) Daneben können schmelzbare Materialien auch in Strangform auf den Schichtenkörper aufgetragen werden (FDM). Auch hier wird zum Anlauf ein Winkel auf der Fördereinrichtung als Hilfsplattform benötigt, bis der Schichtenkörper genug Festigkeit erzielt hat. Dazu wird ein Strang eines schmelzbaren Materials durch eine in der Auftragsebene beliebig positionierbare beheizte Düse gefördert, so dass an deren Austritt ein kontrollierter Materialfluss des nunmehr aufgeschmolzenen Materials entsteht. Die Düse wird computergesteuert über den bestehenden Schichtenkörper gesteuert und gibt an den entsprechenden Stellen selektiv Material ab. Der Materialstrom muss gegenüber der Düsenbewegung koordiniert erfolgen, um eine gleichmäßige Strangdicke zu gewährleisten. Beim Auftrag wird die darunter liegende Struktur aus dem Strangmaterial wieder mit angeschmolzen und ergibt zusammen mit dem neuen Material einen festen Verbund. Die Düse wird z.B. über ein System von zwei gekreuzten Spindelachsen in der Schichtauftragsebene gesteuert bewegt.
   Damit beliebig komplexe Strukturen gebaut werden können, wird ein zweites Material in gleicher Weise mit einer zweiten Düse an den Stellen aufgetragen, die geeignet sind das Gewicht der gewünschten Struktur auf der Förderebene abzustützen. Das zweite Material kann z.B. einen niedrigeren Schmelzpunkt als das erste Material aufweisen oder z.B. auch eine andere Löslichkeit in fluiden Medien aufweisen.
   Um Verzug zu vermeiden, kann der Schichtenkörper in einer geheizten Atmosphäre aufgebaut werden. Die Temperatur des Schichtenkörpers sollte aber unterhalb der Erstarrungstemperatur des zweiten Materials liegen.
   Der Aufbau des Schichtenkörpers läuft dann konform zu dem unter 1) beschriebenen Verfahren. Nach einer gewissen Mindestlänge kann der Schichtenkörper aus der geheizten Atmosphäre über eine Abkühlstrecke herausgeführt werden und in einem Entnahmebereich beispielsweise mit dem lösenden Fluid beaufschlagt werden, um die Bauteile von den Stützstrukturen zu trennen.
   Ebenfalls möglich ist es, den Schichtenkörper nach Austritt aus der Abkühlstrecke z.B. über eine Thermosäge zu vereinzeln und die entstandenen Blöcke getrennt weiter zu behandeln. Die Blöcke sollten dann eine auf die darin befindlichen Bauteile abgestimmte Länge aufweisen.
3) Nicht zuletzt kann auch über Tropfenauftrag zweier Materialien ein Schichtenkörper in ähnlicher Weise entstehen (MJM). Dazu werden Druckköpfe, die Einzeltropfen zweier unterschiedlicher Materialien erzeugen können, in einer Schichtauftragseben über den Schichtenkörper bewegt und geben entsprechend den Konturdaten aus dem Rechner Baumaterial und Stützmaterial gesondert auf den Schichtenkörper ab. Das Stützmaterial muss hier wieder dafür sorgen, dass mindestens das Eigengewicht des Schichtenkörpers auf der Fördereinheit abgestützt werden kann.

Die Verfestigung des Baumaterials kann thermisch über Erkalten einer Schmelze oder auch über Polymerisationsreaktion z.B. durch Belichtung eines photosensitiven Polymers erfolgen.

Gleiches gilt für das Stützmaterial.

In allen drei Fällen stellt die Kontrolle der Dicke der aktuell prozessierten Schicht eine Herausforderung dar. Bei 1) kann diese nicht eingestellt werden, sondern ergibt sich aus der Foliendicke. Insofern ist eine Messung der aufgeklebten Materialdicke erstrebenswert. Die Messung kann verwendet werden, um eine Korrektur der aktuell anstehenden Schichtdaten zu errechnen und den so vorher entstandenen Fehler zu kompensieren

Bei 2) und 3) kann die Auftragshöhe durch eine zusätzliches Nivellierelement wie z.B. die Fläche der Düse in 2) oder eine beheizte Walze oder eine Abziehklinge oder ein Fräser kontrolliert werden.

Ein erfindungsgemäßes Verfahren kann auf einer gegenüber dem Stand der Technik einfacheren Vorrichtung durchgeführt werden.

Die Bewegung der Vorrichtung zum Schichtpositionieren muss im Gegensatz zu Vorrichtungen des Standes der Technik nicht schnell erfolgen, da keine Positionierfahrten mit langen Wegen mehr nötig sind. Folglich kann als Antrieb auch ein diskontinuierliches Schaltwerk zum Einsatz kommen. Hierbei wird nach einem Beschichtungsvorgang um eine Schichtstärke verfahren. Als Beispiel könnte ein pneumatischer Aktor dienen. Die Schichtstärke wird über Anschläge gesteuert. Zur Übersetzung der Bewegung können Hebel oder Getriebe zum Einsatz kommen. Besonders bevorzugt wird ein Schaltfreilauf in Kombination mit einem Hebel der über einen pneumatischen Zylinder betätigt wird.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 einen Schrägriss einer Vorrichtung nach dem Stand der Technik;
Figur 2 eine Schnittdarstellung durch eine Vorrichtung nach dem Stand der Technik;
Figur 3 eine Schnittdarstellung eines Baubehälter nach dem Stand der Technik und eine Illustration von verschiedenen Bäuteilfestigkeiten;
Figur 4 eine Schnittdarstellung einer bevorzugten Ausführungsform der Erfindung;
Figur 5 eine Illustration vom Böschungswinkel und die Übertragung auf eine bevorzugte Ausführung der Erfindung;
Figur 6 einen Schrägriss einer erfindungsgemäß bevorzugen Vorrichtung;
Figur 7 eine Schnittdarstellung einer weiteren bevorzugten Ausführungsform der Erfindung;
Figur 8 eine Illustration von möglichen Fehlerquellen bei der erfindungsgemäßen Vorrichtungen;
Figur 9 eine Schnittdarstellung einer bevorzugten Ausführung der Erfindung;
Figur 10 eine Schnittdarstellung, die nicht erfindungsgemäß ist;
Figur 11 eine Schnittdarstellung einer erfindungsgemäß ausgeführten Vorrichtung zum automatischen Entpacken der Bauteile;
Figur 12 einen Schrägriss einer Erfindungsgemäßen Vorrichtung zum automatischen Entfernen von Partikelmaterial;
Figur 13 eine Schnittdarstellung einer erfindungsgemäß ausgeführten Vorrichtung;
Figur 14 ein Gliederband als Fördermittel für den Einsatz gemäß einer bevorzugten Ausführungsform der Erfindung;
Figur 15 ein Magazinband als Fördermittel für den Einsatz gemäß einer bevorzugten Ausführungsform der Erfindung;
Figur 16 eine perspektivische Ansicht eines Verfahrens gemäß einer bevorzugten Ausführungsform, bei dem als Material Folien verwendet werden;
Figur 17 eine perspektivische Ansicht eines Verfahrens gemäß einer bevorzugten Ausführungsform, bei dem als Material geschmolzener Kunststoff verwendet wird;
Figur 18 eine perspektivische Ansicht eines Verfahrens gemäß einer bevorzugten Ausführungsform, bei das Baumaterial mit einem Druckkopf aufgetragen wird;
Figur 19 einen Antrieb zum Schichtpositionieren; und
Figur 20 einen um ein Kettenvorgelege erweiterter Antrieb nach Figur 19.

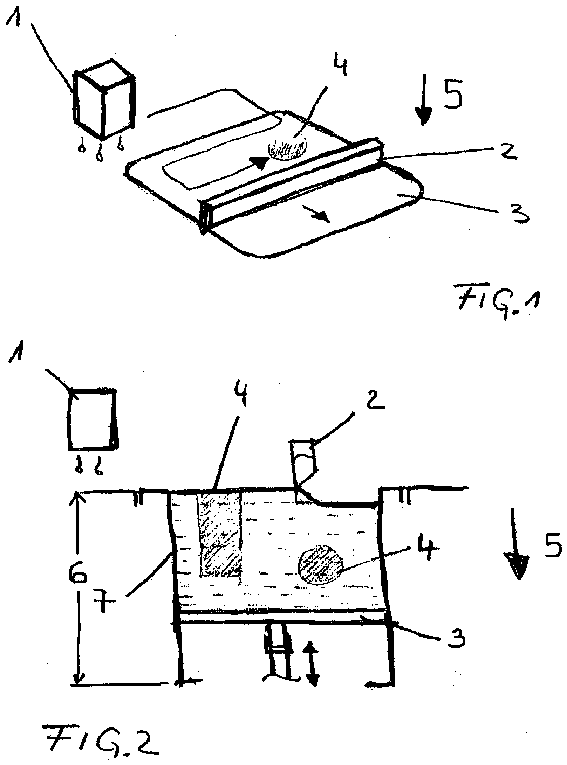

Figur 1 zeigt eine Vorrichtung nach dem Stand der Technik. Ein Beschichter 2 legt eine Schicht aus Partikelmaterial auf eine Bauplattform 3. Im Anschluss wird gemäß Computerdaten selektiv mit der Verfestigungseinrichtung 1, hier einem Druckkopf, das Partikelmaterial zu einem Bauteil 4 verfestigt. Die Vertikale oder auch Richtung der Schwerkraft, die hier auch die Senkrechte zur Bauplattform 3 darstellt, ist mit dem Pfeil 5 bezeichnet. Nach der Verfestigung wird die Bauplattform 3 um eine Schichtstärke abgesenkt und es wird erneut eine Schicht erzeugt.

In Figur 2 ist die gleiche Vorrichtung im Schnitt dargestellt. Es sind bereits mehrere Schichten erzeugt. Begrenzend bei Verfahren des Standes der Technik ist der auf der Abbildung gezeigte Baubehälter 7, der hier auch den Prozessraum darstellt. Nach einer gewissen Bauhöhe 6 muss der Behälter 7 entleert oder getauscht werden.

Wirkt die Verfestigung nicht direkt sondern mit einem gewissen Zeitverzug, sind bei den Verfahren des Standes der Technik besondere Umstände zu beachten.

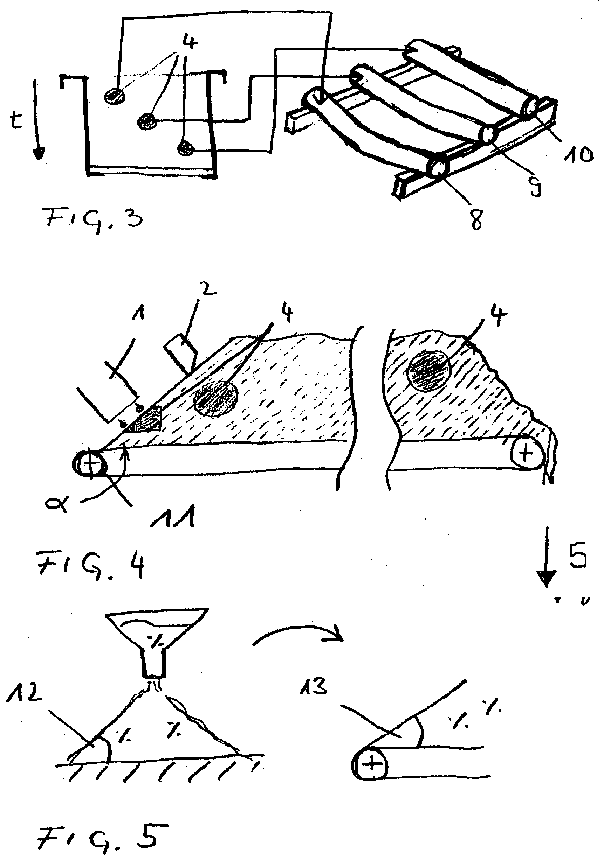

Wie beispielsweise der Figur 3 zu entnehmen ist, liegen beim Entpacken der Bauteile 4 oben im Baubehälter 7 die Teile, die zuletzt von der Verfestigungseinrichtung 1 und dem Beschichter 2 erzeugt wurden. Diese Teile 8 sind weniger fest als beispielsweise die Teile 9 und 10 weiter unten im Baubehälter 7. Dies bedingt, dass vor dem Entpacken bei einem derartigen Prozess eine Mindestwartezeit eingehalten werden muss.

Figur 4 stellt eine erste gezeigte bevorzugte Ausführungsform der Erfindung dar. Die Figur 4 zeigt einen mit der Figur 2 vergleichbaren Schnitt. Der Verfahrensablauf gliedert sich hierbei in die Teilschritte Inbetriebnahme der Vorrichtung, kontinuierliches Produzieren von Bauteilen 4 und Außerbetriebsetzung der Vorrichtung. Diese Phasen werden im Folgenden beschrieben:

### Inbetriebnahme:

Erzeugen einer Grundschüttung - Der Beschichter 2 bringt vergleichbar mit Figur 1 eine Schicht auf. Die Schichtebene des Partikelmaterials, die beim Stand der Technik einer zur Bauplattform 3 parallelen Ebene entspricht, ist hierbei aber um einen Winkel α gegenüber einem Förderband 11 geneigt.

Dieser Beschichtungsvorgang wird solange widerholt, bis eine für die gewünschten Abmessungen der herzustellenden Bauteile 4 ausreichende Schüttung entstanden ist. Es entsteht so eine Schüttung, die auf der Beschichterseite glatt ist und auf der abgewandten Seite gemäß entsprechend den Partikelmaterialfließeigenschaften zerklüftet ist.

### Kontinuierlicher Bauprozess:

Wenn die Grundschüttung erzeugt ist, kann ein kontinuierlicher Bauprozess beginnen, der erst beendet werden muss, wenn die Vorrichtung zu Wartungszwecken angehalten wird. Der Prozess gestaltet sich weitgehend analog zum Stand der Technik.

Durch den Beschichter 2 wird in einem Prozessraum eine Schicht erzeugt, die gegenüber der Senkrechten 5 einen Winkel α aufweist. Im Anschluss wird eine vorbestimmte Menge Partikelmaterial durch die Verfestigungseinheit 1 selektiv verfestigt. Der Prozessraum ist hierbei kein abgegrenzter Raum, sondern der Raum, in dem das Objekt aufgebaut wird, anschließend wird er aus diesem Bereich, beziehungsweise Prozessraum herausgeführt.

Die Computerdatenaufbereitung muss diese Anordnung berücksichtigen. Das Förderband 11 wird daraufhin um eine Schichtstärke weiter gefahren, so dass die Schüttung sich von der Beschichterebene und damit langsam aus dem Prozessraum herausbewegt. Dieser Prozess wiederholt sich, bis die Vorrichtung außer Betrieb genommen wird. In der Schüttung befinden sich die Bauteile 4, die sich durch die Vorschubbewegung immer weiter von der Beschichterebene entfernen.

Nach einer gewissen Strecke auf dem Förderband 11 können die Bauteile 4 entpackt werden, während der Aufbauprozess im Prozessraum nicht unterbrochen wird. Die Länge dieser Strecke des Förderbandes 11 ist dabei abhängig vom eingesetzten Prozess. So kann beispielsweise bei Sinterprozessen die Abkühlung maßgeblich sein. Bei chemischen Verfestigungsmechanismen ist die Abbindezeit maßgeblich.

Zudem kann in diesem Bereich die Ausschleusung der Bauteile 4 und des unverbauten Partikelmaterials aus besonderen Bereichen, wie beispielsweise Schutzgasatmosphären, erfolgen.

Das Entpacken selbst kann manuell auf der Vorrichtung oder durch Abfließen des Partikelmaterials erfolgen.

### Außer Betrieb setzen:

Soll die Vorrichtung zu Wartungszwecken außer Betrieb gesetzt werden, kann die gesamte Schüttung auf dem Förderband 11 durch eine Bewegung des Förderbandes 11 aus dem Prozessraum gebracht werden.

Der Winkel 13 zwischen dem Förderband 11 und der Beschichterebene ist durch den Böschungswinkel des Partikelmaterials begrenzt (Figur 5). Da Winkel größer dem Böschungswinkel 12 die Gefahr von herabrutschendem Partikelmaterial mit sich bringen, sollte der Winkel kleiner gewählt werden als der Böschungswinkel 12. Dadurch kann garantiert werden, dass für den Bauprozess immer eine einwandfreie Oberfläche zur Verfügung steht.

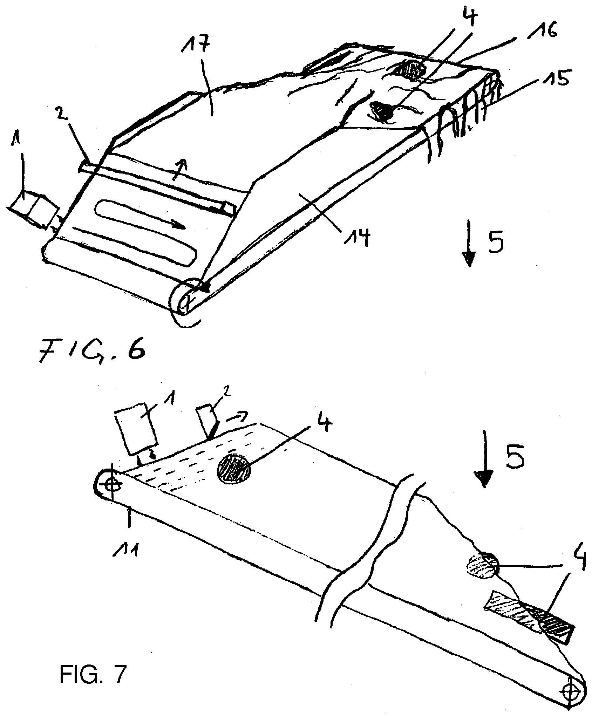

Figur 6 zeigt einen Schrägriss einer besonders bevorzugten Ausführung der Erfindung. Hier sind zu seitlichen Begrenzung der Schüttung Wände 14 angebracht. An diesen läuft die Schüttung reibungsbehaftet vorbei. Durch diese Wände kann die Vorrichtung, bei gleichem nutzbaren Bauquerschnitt, kleiner als bei seitlich freifließendem Partikelmaterial aufgebaut werden. Außerhalb des Prozessraumes können dann die Wände 14 weggelassen werden, so dass ein Teil der Arbeit beim Entpacken der Bauteile, nämlich das Entfernen von nicht verbautem Partikelmaterial, durch bloßes Fehlen der Wände 14 verrichtet werden kann, indem das Partikelmaterial frei abfließt 15.

In Figur 7 ist eine weiter bevorzugte Ausführung der Erfindung gezeigt. Die Abbildung zeigt einen Schnitt. Hierbei ist das Förderband 11 um einen gewissen Winkel gegen die Senkrechte 5 geneigt. Die Ebene auf der sich der Beschichter 2 und die Verfestigungseinheit bewegen liegt zur Horizontalen gesehen nun flacher als bei der eingangs beschriebenen Vorrichtung. Es können bei einer solchen Ausgestaltung der Erfindung auch Partikelmaterialien noch wirtschaftlich verarbeitet werden, die einen flachen Böschungswinkel aufweisen. Im Entpackbereich stört der dann steilere Winkel nicht, da hier keine glatte Oberfläche erforderlich ist. Der Winkel begünstigt zudem das selbsttätige Entpacken der Bauteile 4.

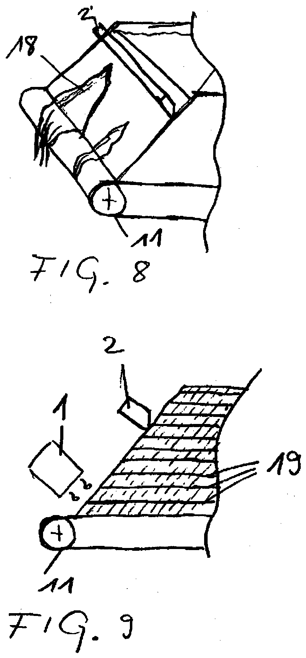

Wird der Böschungswinkel 12 bei einer erfindungsgemäßen Vorrichtung überschritten, brechen aus der durch den Beschichter 2 erzeugten glatten Fläche Partikelmaterialbereiche 18 aus, so dass für den Verfestigungsvorgang keine definierte Oberfläche mehr zur Verfügung steht. Eine Methode diesem Problem zu begegnen wird im Folgenden beschrieben:
Eine weitere erfindungsgemäß bevorzugte Ausführung ist in Figur 9 gezeigt. Durch die Verfestigungseinheit 1 werden Schutzstrukturen oder Hilfsstruktren 19 erzeugt. Diese steigern künstlich den Böschungswinkel 12 des Partikelmaterials. So können "schwierige" Partikelmaterialien auch ohne Änderung der Vorrichtung verarbeitet werden. Die gezeigten horizontalen Flächen können diesem Zweck dienen. Ohne Einschränkung können aber auch andere Strukturen verwendet werden, die eine nahezu beliebige dreidimensionale Gestalt aufweisen können.

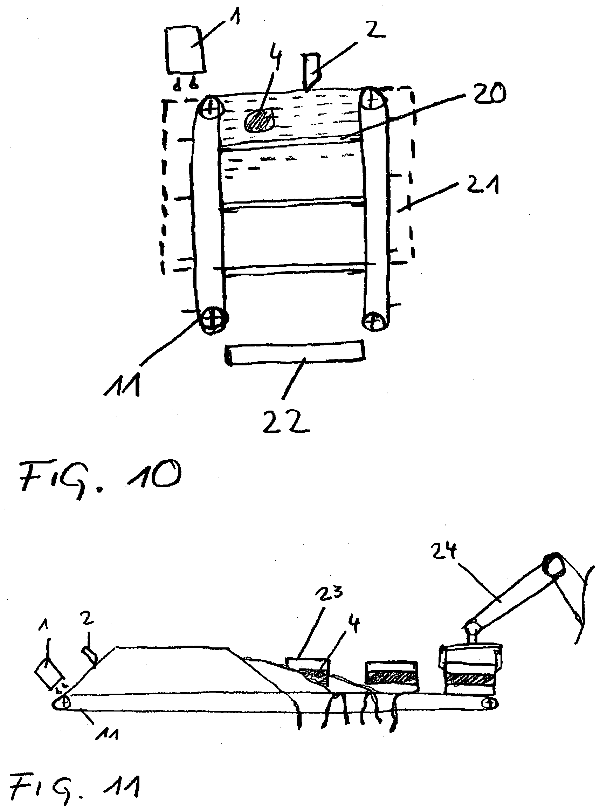

Sinngemäß die gleiche Anordnung, wie die oben beschriebenen Vorrichtungen, zeigt die Figur 10. Hier wird der Materialstrang parallel zur Senkrechten abgeführt. Damit die durch den Beschichter 2 erzeugte Schüttung nicht abrutscht, werden von der Verfestigungseinheit 1 Platten mitaufgebaut, die Böden 20 darstellen. Diese stehen mit mindestens zwei Förderbändern im Eingriff. Die restlichen Wände zur Begrenzung der Partikelmaterialschüttung können starr ausgeführt sein. Damit ebenso, wie unter Anspruch 1 beschrieben, ein kontinuierlicher Produktionsprozess möglich wird, ist unterhalb der eigentlichen Vorrichtung noch ein Übergabeförderband 22 abgebildet. Hier wird die Schüttung übernommen und die Bauteile 4 können, während die Vorrichtung weiter produziert, entnommen werden.

Das beschriebene kontinuierliche Produktionsprinzip eignet sich auch, eine vollständig automatisierte Produktion aufzubauen. Dies ist in Figur 11 dargestellt. Um die Bauteile 4 mit einem Roboter 24 greifen zu können, bietet es sich mit der Verfestigungseinheit 1 an, Hilfsstrukturen 23 einzubringen, die der Roboter 24 leicht greifen kann. Die Lage der Bauteile 4 in der Schüttung ist durch das Produktionsprinzip bekannt und kann zur Ansteuerung des Roboters 24 dienen.

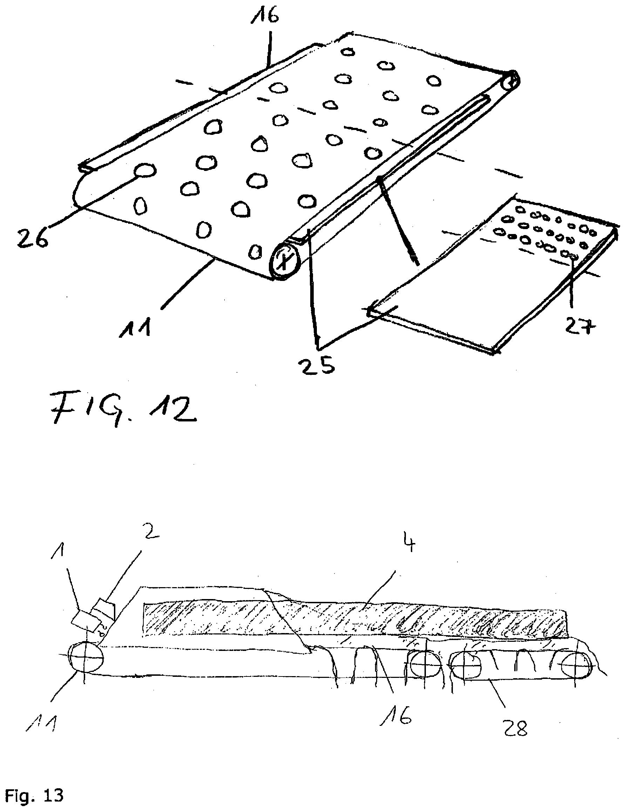

Figur 12 zeigt eine bevorzugte Ausführung eines Förderbandes 11 um die Schüttung zu bewegen. Das Förderband 11 selbst enthält Öffnungen 26. Unterhalb des Bandes 11 ist eine Führungsplatte 25. Diese trägt das Gewicht der Schüttung und gewährleistet die Genauigkeit der Bewegung der Schüttung. Im Bereich, in dem die Schüttung erzeugt wird, und in dem Bereich in dem die Bauteile 4 nachverfestigen, hat die Führungsplatte 25 keine Öffnungen. Im Auspackbereich korrespondieren je nach Stellung des Bandes 11 die Öffnungen 26 und 27. Ein Teil des Partikelmaterials fließt so selbsttätig ab und gibt die Bauteile 4 frei.

Figur 13 zeigt, dass mit einer erfindungsgemäßen Vorrichtung auch Bauteile 4 hergestellt werden können, die in einer Dimension sehr große Abmessungen haben können. Solche Teile müssen nur gestützt werden, wenn sie länger sind als die eigentliche Abmessung der Vorrichtung. Dazu können weitere einfache Förderbänder 28 bereitgestellt werden, die das oder die Bauteile 4 am Ende der Vorrichtung übernehmen.

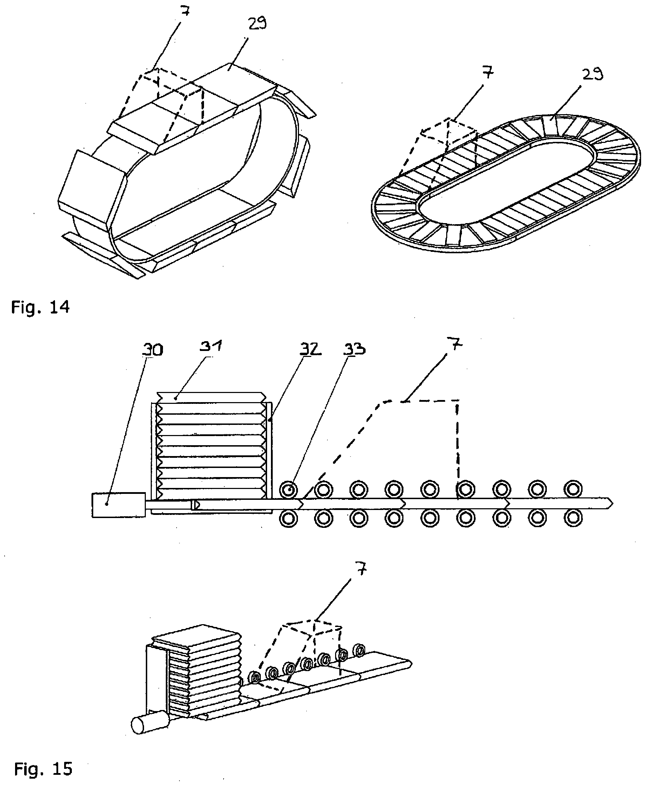

In den Figuren 14 und 15 sind weitere Fördermittel dargestellt, wie sie gemäß der vorliegenden Erfindung beispielsweise anstatt eines Förderbandes zum Einsatz kommen könnten.

In der Figur 14 ist dabei ein Gliederband als Fördermittel dargestellt, während die Figur 15 ein Magazinband zeigt. Gliederbänder erweisen sich als vorteilhaftes Fördermittel, da sie höhere Lasten aufnehmen können als beispielsweise tuchbasierte Förderbänder und zudem eine höhere Steifigkeit senkrecht zur Förderrichtung aufweisen. In Figur 14 sind zwei verschiedene Gliederbänder dargestellt, die die Glieder 29 aufweisen. Bei derartigen Fördermitteln könnte der Bauraum 7 für die Objekte beispielsweise in dem gestrichelt gezeichneten Bereich vorgesehen sein.

Die Verwendung von Magazinbändern, siehe Figur 15, in einer erfindungsgemäßen Vorrichtung ist dann vorteilhaft, wenn neben einer hohen Steifigkeit auch eine Modularität in der Förderkette gefordert ist. Mit Hilfe solcher Magazinbänder können beispielsweise gedruckte Objekte nach Beendigung des Aufbauprozesses auf den jeweiligen Abschnitten der Förderstrecke beispielsweise auf der Bauplattform 31 bis zur weiteren Verwendung in einem Magazin 32 verbleiben und so zeitweise von der restlichen Förderkette getrennt werden. Auch kann die Förderlänge relativ frei an die Notwendigkeiten und örtlichen Gegebenheiten angepasst werden, indem einfach weitere Glieder 31 in das Magazin 32 eingesetzt oder dort entnommen werden. Dies erfolgt beispielsweise über einen Zylinder 30, der ein Glied aus dem Magazin herausschiebt und dieses dann über die Förderrollen 33 fortbewegt wird. Eine mögliche Anordnung eines Bauraumes 7 ist wieder gestrichelt dargestellt.

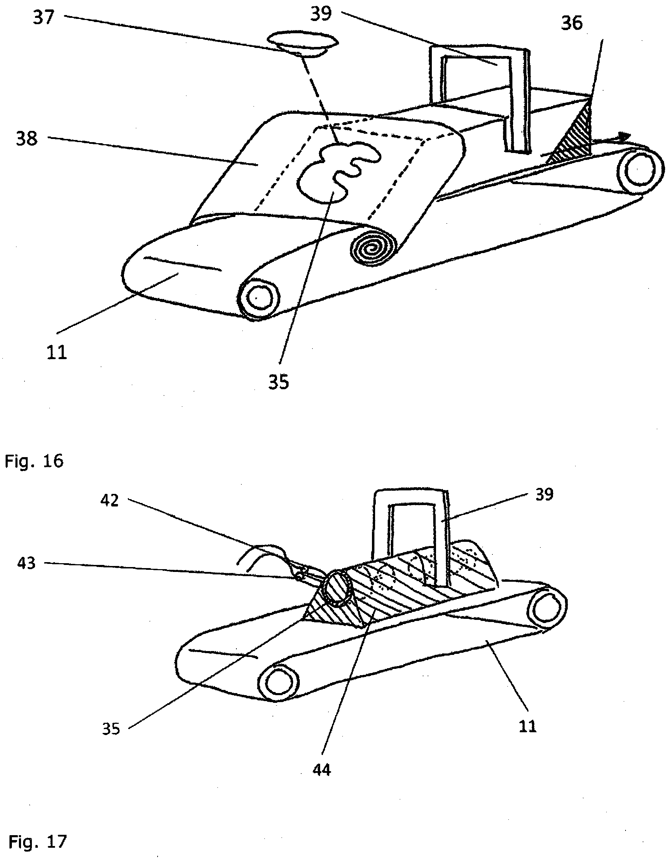

In der Figur 16 ist eine Verfahren gemäß einer bevorzugten Ausführungsform der Erfindung gezeigt. Es handelt sich hierbei um ein Endlosverfahren für generative Fertigungsverfahren, bei dem Folienschichten 34 mit ausgeschnittenen Konturen zu einem Modell 35 verklebt werden.

Die Folienschichten können dabei dünne Folienrollen 38 aus Papier, Metall aber auch Kunststoff sein. Sie werden auf ein Anlaufstück 36 aufgetragen werden, das auf einem Förderband 11 im Wesentlichen horizontal bewegt wird.

Die Auftragsebene des Schichtenkörpers erfolgt mit einem Winkel kleiner 90° zur Bewegungsrichtung.

Die Folien 34 werden auf den Schichtenkörper aufgebracht und dort mit dem Schichtenkörper beispielsweise über Kleben, Schweißen oder ähnlichem verbunden. Die Kontur des Bauteils wird aus der jeweiligen Schicht beispielsweise mittels Laser 37 herausgeschnitten. Das Schneiden kann dabei vor oder nach dem Auftragsschritt erfolgen. Wenn es nach dem Auftragsschritt erfolgt, muss die Tiefe des Schnitts kontrolliert werden. Zur Erleichterung des Entpackens können mit Hilfe einer Heißdrahtsäge 39 Hilfsschnitte eingebracht werden, die das umliegende Folienmaterial in kleinere Einheiten zerlegen. Die Hilfsschnitte können beispielsweise in Form von Rechtecken eingebracht werden. An komplizierten Strukturen können die Rechtecke dann auch verkleinert werden, um besser an die Kontur zu kommen.

Ist die aktuelle Folienschicht 34 aufgetragen und beschnitten, wird der Vorschub betätigt und der Schichtenkörper um die Foliendicke weiter transportiert. Der Schichtenkörper sollte eine gewisse Länge erreicht haben, um stabil die darin befindlichen Bauteile beziehungsweise Modelle 35 zu lagern. Hat der Schichtenkörper diese Minimallänge auf der Fördereinrichtung 11 erreicht, kann am der Folienauftragsebene entgegengesetzten Ende mit dem Entfernen des überschüssigen Folienmaterials begonnen werden, um die eigentlichen Bauteile zu gewinnen. Das Entfernen kann dann manuell erfolgen. Der Vorteil in dieser Aufbauart liegt wieder im quasi endlosen Betrieb der Anlage.

Zum Anfahren der Anlage wird ein Winkel beziehungsweise ein Anlaufstück 36 benötigt, auf den die ersten Schichten 34 aufgetragen werden. Der Winkel wird solange benötigt, bis der aus den Folien aufgebaute Schichtenkörper 35 eine entsprechende Eigenfestigkeit aufweist und das eigene Gewicht ohne Verformung tragen kann.

In der Figur 17 ist eine perspektivische Ansicht eines Verfahrens gemäß einer bevorzugten Ausführungsform dargestellt, bei dem als Material in Düsen 42 geschmolzener Kunststoff verwendet wird.

Gemäß der gezeigten Ausführungsform ist eine weitere Düse 43 zum Aufbringen von Stützmaterial 44 vorgesehen. Das Ganze wird dabei wieder auf einem Förderband 11 fortlaufend fortbewegt. Da bei einem solchen Verfahren ein endloser Block gebildet wird, müssen fertige Teilbereiche zur Entnahme beispielsweise durch eine Heißdrahtsäge 39 getrennt werden.

Die Druckköpfe 42, 43, die Einzeltropfen zweier unterschiedlicher Materialien erzeugen können, werden in einer Schichtauftragsebene über den Schichtenkörper 35 bewegt und geben entsprechend den Konturdaten aus dem Rechner Baumaterial und Stützmaterial 44 gesondert auf den Schichtenkörper ab. Das Stützmaterial 44 soll hierbei dafür sorgen, dass mindestens das Eigengewicht des Schichtenkörpers 35 auf der Fördereinheit 11 abgestützt werden kann.

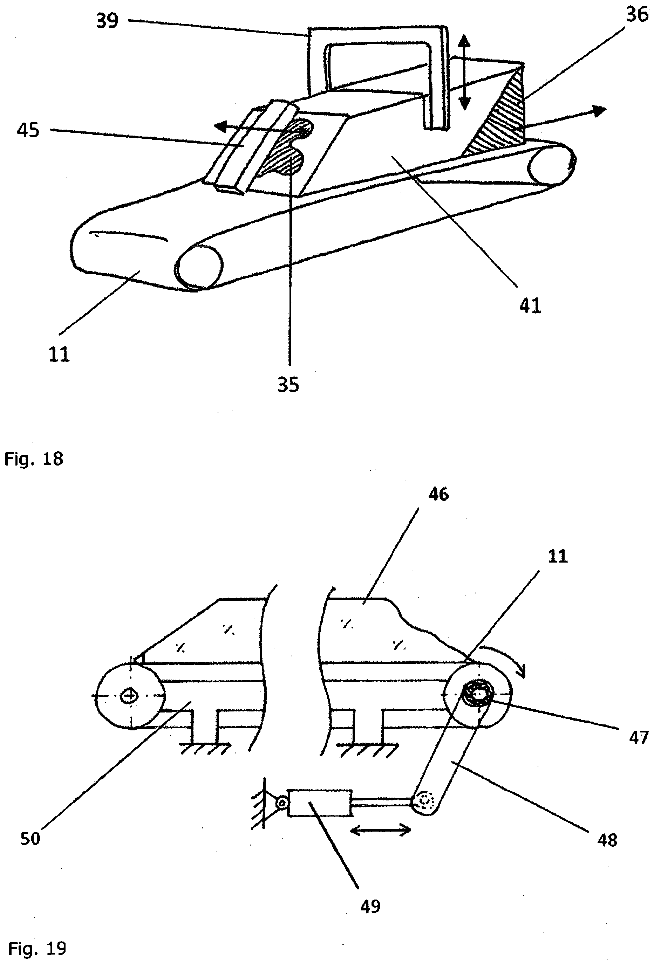

Ein Endlosverfahren für ein 3-D Druckverfahren, bei dem das Material direkt mit einem Druckkopf 45 aufgetragen wird, ist in der Figur 18 dargestellt.

Bei solchen Verfahren kann eine hierfür verwendete Vorrichtung vereinfacht werden

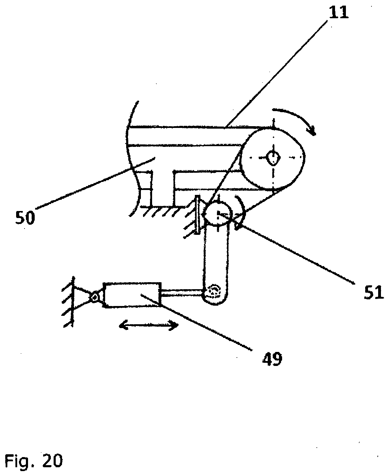

Die Bewegung der Vorrichtung zum Schichtpositionieren muss im Gegensatz zu Vorrichtungen des Standes der Technik nicht schnell erfolgen, da keine Positionierfahrten mit langen Wegen mehr nötig sind. Folglich kann wie oben bereits erwähnt als Antrieb auch ein diskontinuierliches Schaltwerk zum Einsatz kommen. Mögliche Ausführungsformen sind in der Figur 19 und der Figur 20 dargestellt.

Eine Pulverschüttung 46 ist auf einem Förderband 11 vorgesehen.

Um nach einem Beschichtungsvorgang um eine Schichtstärke zu verfahren, wird das gesamte Förderband über die Antriebsrolle derart weiter bewegt, dass sich die Auftragsebene um die gewünschte Schichtstärke der Antriebsrolle nähert. Das dazu erforderliche Moment und der Drehwinkel können über einen Hebel (48) der über einen Freilauf (47) mit der Antriebsrolle verbunden ist, aufgebracht werden. Der Hebel kann beispielsweise über einen Pneumatikzylinder(49) betätigt werden. Die Schichtstärke selbst wird dann vom Verfahrweg des Zylinders bestimmt. Dieser kann über Anschläge begrenzt werden.

Je nach gefordertem Drehmoment können weitere Getriebestufen (51) sinnvoll sein. Die sich auf Grund von Elastizitäten und Losen einstellende Schichtstärke kann bei der Inbetriebnahme ermittelt werden und die gewünschte Schichtstärke eingestellt werden.

### Bezugszeichenliste

- 1: Verfestigungseinheit
- 2: Beschichter
- 3: Bauplattform
- 4: Bauteil
- 5: Vertikale
- 6: Bauhöhe
- 7: Baubehälter/Prozessraum
- 8: Bauteil (oben aus dem Baubehälter)
- 9: Bauteil (mittig aus dem Baubehälter)
- 10: Bauteil (unten aus dem Baubehälter)
- 11: Förderband
- 12: Böschungswinkel
- 13: Winkel der Bauebene relativ zum Förderband
- 14: Feste Begrenzungswand
- 15: Abfließendes Partikelmaterial
- 16: Ende der Vorrichtung
- 18: Partikelmaterialbereiche
- 19: Strukturen
- 20: Boden
- 21: Begrenzungswand
- 22: Übergabefördermittel
- 23: Hilfsstrukturen
- 24: Roboter
- 25: Führungsplatte
- 26: Öffnungen
- 27: Öffnungen
- 28: weiteres Förderband
- 29: Glieder des Förderbandes
- 30: Einschubeinheit
- 31: Starres Kettenglied
- 32: Magazin
- 33: Förderrolle
- 34: Folienschichten
- 35: Modell
- 36: Anlaufstück
- 37: Laser 1
- 38: Folienrollen
- 39: Heißdrahtsäge

- 41: Jobklotz
- 42: Düse für Baumaterial

- 43: Düse für Stützmaterial
- 44: Stützmaterial
- 45: Druckkopf
- 46: Pulverschüttung
- 47: Freilauf
- 48: Hebelarm
- 49: Pneumatikzyinder
- 50: Gestell
- 51: Kettenvorgelege

## Patentansprüche

1. Verfahren zum kontinuierlichen Herstellen dreidimensionaler Objekte (4) gemäß Computerdaten, wobei in einem Prozessraum ein Material auf ein bewegliches Materialaufnahmemittel (11) schichtweise aufgetragen wird und das Material über eine Verfestigungseinrichtung umfassend einen Tropfenerzeuger (1) im Prozessraum selektiv verfestigt wird, diese Schritte wiederholt werden, wobei eine Förderung des Materials während des Aufbauprozesses und fortlaufend durchgehend und gleichmäßig bis zu einer Entpackposition erfolgt und wobei ein Auftragsmittel (2) für das Material und eine aufgetragene Materialschicht des Materials derart vorgesehen sind, dass zum Auftragen einer weiteren Materialschicht Auftragsmittel (2) und Materialschicht derart relativ zueinander bewegt werden, dass die Aufnahmeebene (11) des Aufnahmemittels zu der Schichtebene einer aufgetragenen Materialschicht einen Winkel von > 0° aufweist.

2. Verfahren nach Anspruch 1, **dadurch gekennzeichnet, dass** eine Förderrichtung bis zur Entpackposition im Wesentlichen bestehen bleibt oder/und dass durch die Verfestigungseinrichtung in den Materialschichten Strukturen erzeugt werden, die ein Abrutschen der Materialschichten beim Aufbauverfahren erschweren.

3. Verfahren nach einem der vorhergehenden Ansprüche, **dadurch gekennzeichnet, dass** das Material ein Pulvermaterial, ein Folienmaterial, ein fluides Material, wie beispielsweise ein Strangmaterial und/oder ein Tropfenmaterial ist.

4. Verfahren nach einem der vorhergehenden Ansprüche, **dadurch gekennzeichnet, dass** zuerst Partikelmaterial in einer Schüttung in einen Prozessraum eingebracht wird und anschließend auf dieser Partikelmaterialschüttung ein Bauprozess eines Objektes beginnt.

5. Verfahren nach einem der vorhergehenden Ansprüche, **dadurch gekennzeichnet, dass** die erzeugten Objekte in der Entpackposition ohne Unterbrechung des Aufbauverfahrens entpackt werden.

6. Verfahren nach einem der Ansprüche 1 bis 3, **dadurch gekennzeichnet, dass** als Material Feststoffe in Form dünner Folien aufgetragen wird.

7. Verfahren nach Anspruch 6, **dadurch gekennzeichnet, dass** die Folien mittels Kleben miteinander verbunden werden.

8. Verfahren nach einem der vorhergehenden Ansprüche, **dadurch gekennzeichnet, dass** die Förderung endloserfolgt.

9. Verfahren nach einem der vorhergehenden Ansprüche, **dadurch gekennzeichnet, dass** das Material über Fördermittel bewegt wird.

10. Verfahren nach einem der vorhergehenden Ansprüche, **dadurch gekennzeichnet, dass** Material horizontal bewegt wird.

11. Verfahren nach einem der vorhergehenden Ansprüche, **dadurch gekennzeichnet, dass** das Material mit einem Winkel zur Horizontalen bewegt wird.

12. Verfahren zum kontinuierlichen Herstellen von dreidimensionalen Objekten (4) gemäß Computerdaten, wobei ein Material auf ein bewegliches Materialaufnahmemittel (11) aufgebracht wird und an einer Seite des Materials ein Objekt oder mehrere Objekte durch wiederholtes Aufbringen von Schichten des Materials und anschließendes Verfestigen und/oder Verbinden des Materials mittels einer Verfestigungseinrichtung umfassend einen Tropfenerzeuger (1) und Wiederholen dieser Schritte gebildet wird, das oder die Objekte auf dem Aufnahmemittel (11) während des Herstellprozesses kontinuierlich aus einem Prozessbereich heraus bewegt werden und während des Herstellprozesses auf dem Aufnahmemittel (11) entpackt werden und wobei ein Auftragsmittel (2) für das Material und eine aufgetragene Materialschicht des Materials derart vorgesehen sind, dass zum Auftragen einer weiteren Materialschicht Auftragsmittel (2) und Materialschicht derart relativ zueinander bewegt werden, dass die Aufnahmeebene des Aufnahmemittels (11) zu der Schichtebene einer aufgetragenen Materialschicht einen Winkel von > 0° aufweist.

13. Vorrichtung zum kontinuierlichen Herstellen dreidimensionaler Objekte (4) gemäß Computerdaten, wobei ein Material mit einem Auftragsmittel (2) auf ein bewegliches Materialaufnahmemittel (11) in einer Schichtebene schichtweise aufgetragen wird und über eine Verfestigungseinrichtung umfassend einen Tropfenerzeuger (1) selektiv verfestigt wird und diese Schritte wiederholt werden, wobei das Materialaufnahmemittel (11) derart vorgesehen ist, um das Material während des Aufbauprozesses und durchgehend und gleichmäßig bis zu einer Entpackposition zu fördern und wobei das Auftragsmittel (2) für das Material und eine aufgetragene Materialschicht des Materials derart vorgesehen sind, dass zum Auftragen einer weiteren Materialschicht Auftragsmittel (2) und Materialschicht derart relativ zueinander bewegbar sind, dass die Aufnahmeebene des Aufnahmemittels (11) zu der Schichtebene der aufgetragenen Materialschicht einen Winkel von > 0° aufweist.

14. Vorrichtung nach Anspruch 13, **dadurch gekennzeichnet, dass** das als Antrieb zur Schichtpositionierung ein diskontinuierliches Schaltwerk aufweist.

15. Vorrichtung nach Anspruch 13 oder 14, **dadurch gekennzeichnet, dass** der Beschichter und/oder die Verfestigungseinrichtung auf einem einen Winkel zur Senkrechten der Aufnahmeebene des Aufnahmemittels angeordneten Koordinatensystem bewegbar sind.

## Claims

1. A method for the continuous production of three-dimensional objects (4) according to computer data, wherein a material is applied, layer by layer, on a movable material-receiving means (11) in a process chamber and the material is selectively solidified by a solidifying means comprising a drop generator (1) in the process chamber, these steps being repeated,
wherein the material is conveyed during the construction process in a continuous, uninterrupted and uniform manner to an unpacking position, and wherein an application means (2) for the material and an applied material layer of the material are provided such that, in order to apply another material layer, the application means (2) and the material layer are moved with respect to each other in such a manner that the receiving plane of the receiving means (11) is at angle of > 0° to the layer plane of an applied material layer.

2. The method according to claim 1, **characterised in that** a conveying direction is substantially maintained up to the unpacking position or/and the solidifying means causes structures to form in the material layers that make it more difficult for the material layers to slip down during the construction process.

3. The method according to any one of the preceding claims, **characterised in that** the material is a powder material, a sheet material, a fluid material, such as e.g. a material in the form of strands and/or drops.

4. The method according to any one of the preceding claims, **characterised in that** first particulate material is introduced into the process chamber in a material bed and then a construction process of an object begins on the particulate material bed.

5. The method according to any one of the preceding claims, **characterised in that** the generated objects are unpacked in the unpacking position without interrupting the construction process.

6. The method according to any one of claims 1 to 3, **characterised in that** the material is applied as solids in the form of thin sheets.

7. The method according to claim 6, **characterised in that** the sheets are connected with each other by adhesion.

8. The method according to any one of the preceding claims, **characterised in that** the conveying is continuous.

9. The method according to any one of the preceding claims, **characterised in that** the material is moved by conveying means.

10. The method according to any one of the preceding claims, **characterised in that** the material is moved horizontally.

11. The method according to any one of the preceding claims, **characterised in that** the material is moved at an angle to horizontal.

12. A method for the continuous production of three-dimensional objects (4) according to computer data, wherein
a material is applied onto a movable material-receiving means (11) and one or more objects is/are formed on one side of the material by repeatedly applying layers of the material and subsequently solidifying and/or connecting the material by a solidifying means comprising a drop generator (1) and repeating these steps,
the object or objects on the receiving means (11) is/are moved continuously out of a process area during the production process and are unpacked on the receiving means (11) during the production process, and
wherein an application means (2) for the material and an applied material layer of the material are provided such that, in order to apply another material layer, the application means (2) and the material layer are moved with respect to each other in such a manner that the receiving plane of the receiving means (11) is at angle of > 0° to the layer plane of an applied material layer.

13. A device for the continuous production of three-dimensional objects (4) according to computer data, wherein a material is applied, layer by layer, onto a movable material-receiving means (11) by an application means (2) in a layer plane and is selectively solidified by a solidifying means comprising a drop generator (1), and these steps are repeated, wherein the material-receiving means (11) is provided such that the material is conveyed in a continuous and uniform manner to an unpacking position during the construction process, and wherein the application means (2) for the material and an applied material layer of the material are provided such that, in order to apply another material layer, the application means (2) and the material layer are movable with respect to each other in such a manner that the receiving plane of the receiving means (11) is at angle of > 0° to the layer plane of the applied material layer.

14. The device according to claim 13, **characterised in that** the drive for layer positioning comprises a discontinuous feeding mechanism.

15. The device according to claim 13 or 14, **characterised in that** the coater and/or the solidifying means is/are movable on a coordinate system arranged at an angle to the perpendicular of the receiving plane of the receiving means.

## Revendications

1. Procédé de production continue d'objets tridimensionnels (4) selon des données informatiques, dans lequel un matériau est appliqué couche par couche sur un moyen de réception de matériau (11) mobile dans une chambre de procédé et le matériau est solidifié de manière sélective dans la chambre de procédé par un moyen de solidification comportant un générateur de gouttes (1), ces étapes étant répétées, le matériau étant transporté de manière continue, ininterrompue et uniforme jusqu'à une position de désemballage pendant le procédé de construction, et
un moyen d'application (2) pour le matériau et une couche de matériau appliquée étant réalisés de sorte que, pour appliquer une autre couche de matériau, le moyen d'application (2) et la couche de matériau sont déplacés, l'un par rapport à l'autre, de manière à ce que le plan de réception du moyen de réception (11) présente un angle de > 0° par rapport au plan de couche d'une couche de matériau appliquée.

2. Procédé selon la revendication 1, **caractérisé en ce qu'**une direction de transport est sensiblement maintenue jusqu'à la position de désemballage ou/et le moyen de solidification produit des structures dans les couches de matériau qui rendent un glissement des couches de matériau plus difficile pendant le procédé de construction.

3. Procédé selon l'une quelconque des revendications précédentes, **caractérisé en ce que** le matériau est un matériau en poudre, un matériau en feuille, un matériau fluide, tel que, par exemple, un matériau en forme de bandes et/ou de gouttes.

4. Procédé selon l'une quelconque des revendications précédentes, **caractérisé en ce que** d'abord, de la matière particulaire en vrac est introduite dans la chambre de procédé et puis un procédé de construction d'un objet commence sur la matière particulaire en vrac.

5. Procédé selon l'une quelconque des revendications précédentes, **caractérisé en ce que** les objets générés sont désemballés à la position de désemballage sans interrompre le procédé de construction.

6. Procédé selon l'une quelconque des revendications 1 à 3, **caractérisé en ce que** le matériau est appliqué sous forme de solides en feuilles minces.

7. Procédé selon la revendication 6, **caractérisé en ce que** les feuilles sont reliées les unes aux autres par collage.

8. Procédé selon l'une quelconque des revendications précédentes, **caractérisé en ce que** le transport est effectué de manière continue.

9. Procédé selon l'une quelconque des revendications précédentes, **caractérisé en ce que** le matériau est déplacé par des moyens de transport.

10. Procédé selon l'une quelconque des revendications précédentes, **caractérisé en ce que** le matériau est déplacé horizontalement.

11. Procédé selon l'une quelconque des revendications précédentes, **caractérisé en ce que** le matériau est déplacé à un angle par rapport à l'horizontale.

12. Procédé de production continue d'objets tridimensionnels (4) selon des données informatiques, dans lequel
un matériau est appliquée sur un moyen de réception de matériau (11) mobile et un ou plusieurs objets est/sont formés d'un côté du matériau par application répétitive de couches du matériau, suivi par solidification et/ou liaison du matériau par un moyen de solidification comportant un générateur de gouttes (1), et répétition de ces étapes,
le ou les objets sur le moyen de réception (11) est/sont sortis de manière continue d'une zone de procédé pendant le procédé de production et sont désemballés sur le moyen de réception (11) pendant le procédé de production,
et
un moyen d'application (2) pour le matériau et une couche de matériau appliquée étant réalisés de sorte que, pour appliquer une autre couche de matériau, le moyen d'application (2) et la couche de matériau sont déplacés, l'un par rapport à l'autre, de manière à ce que le plan de réception du moyen de réception (11) présente un angle de > 0° par rapport au plan de couche d'une couche de matériau appliquée.

13. Dispositif de production continue d'objets tridimensionnels (4) selon des données informatiques, dans lequel un matériau est appliqué couche par couche sur un moyen de réception de matériau (11) mobile par un moyen d'application (2) dans un plan de couche et est solidifié de manière sélective par un moyen de solidification comportant un générateur de gouttes (1), et ces étapes sont répétées, le moyen de réception de matériau (11) étant réalisé de manière à ce que le matériau soit transporté de manière continue et uniforme jusqu'à une position de désemballage pendant le procédé de construction, et le moyen d'application (2) pour le matériau et une couche de matériau appliquée étant réalisés de sorte que, pour appliquer une autre couche de matériau, le moyen d'application (2) et la couche de matériau soient mobiles, l'un par rapport à l'autre, de manière à ce que le plan de réception du moyen de réception (11) présente un angle de > 0° par rapport au plan de couche de la couche de matériau appliquée.

14. Dispositif selon la revendication 13, **caractérisé en ce que** l'entraînement pour le positionnement des couches comporte un mécanisme d'avancement discontinu.

15. Dispositif selon la revendication 13 ou 14, **caractérisé en ce que** l'enducteur et/ou le moyen de solidification est/sont déplaçables sur un système de coordonnées disposé à un angle par rapport à la verticale du plan de réception du moyen de réception.
